## Europäisches Patentamt
## European Patent Office
## Office européen des brevets

(19)

(11) Veröffentlichungsnummer: **0 225 481**
B1

(12)
# EUROPÄISCHE PATENTSCHRIFT

(45) Veröffentlichungstag der Patentschrift:
**07.03.90**

(51) Int. Cl.⁴: **B23K 7/00**

(21) Anmeldenummer: **86115302.1**

(22) Anmeldetag: **05.11.86**

(54) **Verfahren zum autogenen Brennschneiden mit Sauerstoff.**

(30) Priorität: **11.12.85  DE 3543657**

(43) Veröffentlichungstag der Anmeldung:
**16.06.87 Patentblatt 87/25**

(45) Bekanntmachung des Hinweises auf die Patenterteilung:
**07.03.90 Patentblatt 90/10**

(84) Benannte Vertragsstaaten:
**BE ES FR GB IT LU**

(56) Entgegenhaltungen:
**DE-A- 1 629 965
DE-A- 1 752 904
US-A- 2 521 199
US-A- 3 498 848**

(73) Patentinhaber: **MESSER GRIESHEIM GMBH, Hanauer
Landstrasse 330, D-6000 Frankfurt/Main(DE)**

(72) Erfinder: **Grohmann, Paul, Erlaufstrasse 23,
A-2344 Maria-Enzersdorf(AT)**

## Beschreibung

Verfahren zum autogenen Brennschneiden mit Sauerstoff

Die Erfindung betrifft ein Verfahren zum autogenen Brennschneiden mit Sauerstoff nach dem Oberbegriff des Anspruches 1.

Bekanntlich ist der limitierende Faktor in der Schnittgeschwindigkeit beim Brennschneiden das Austragen der Schlacke aus dem Schnittspalt. Höhere Schnittgeschwindigkeiten wären bei vielen Anwendungsfällen von Vorteil. So ist die Schnittgeschwindigkeit beim autogenen. Brennschneiden von Stranggußbrammen kleiner als die Ausziehgeschwindigkeit der Brammen. Beispielsweise beträgt bei 200 mm dicken Brammen die Schnittgeschwindigkeit max. etwa 0,5 m/min. Die Ausziehgeschwindigkeit beträgt dagegen 1,5 - 2,0 m/min. Wenn die Strangußbrammen der Länge nach getrennt werden sollen, ist es wünschenswert, die Schneidgeschwindigkeit der Ausziehgeschwindigkeit anzupassen.

Die Schneidgeschwindigkeit könnte durch eine Vergrößerung der Sauerstoffzufuhr zur Schneidstelle erhöht werden. So kann die Ausströmgeschwindigkeit aus der Schneiddüse auf Überschallgeschwindigkeit gesteigert werden, wie aus der US-A 2 521 199 bekannt ist. Die hierdurch mögliche Steigerung der Sauerstoffzufuhr ist jedoch begrenzt. Erheblich mehr Sauerstoff kann durch die Schneiddüse zugeführt werden, wenn der Sauerstoff aus ihr in flüssiger Form austritt, wie es aus der DE-A 1 752 904 bekannt ist. In der Praxis treten hierbei aber große Schwierigkeiten auf, da der flüssige Sauerstoff in der Zuleitung und Schneiddüse, sowie beim Austritt aus der Schneiddüse in solchem Maße verdampft, daß die Ausbildung eines präzisen Schneidstrahles in zylindrischer Form unmöglich wird. Eine Realisierung erschien daher nur in Sonderfällen möglich. So ist aus der DD-A 148 020 ein Verfahren zum Schneiden mit flüssigem Sauerstoff bekannt, bei dem auf den Schneidstrahl ein Umgebungsdruck von mindestens 52 bar wirkt und die Austrittstemperatur des Sauerstoffs unter 155 K liegt, d.h. das Schneiden erfolgt in Druckkammern oder großen Wassertiefen. Die genannten Werte von Druck und Temperatur entsprechen denen des kritischen Punktes von Sauerstoff. Bei Einhaltung dieser Werte ist der Sauerstoff immer flüssig, eine gasförmige Phase kann überhaupt nicht auftreten.

Der Erfindung liegt demgegenüber die Aufgabe zugrunde, ein Verfahren zum autogenen Brennschneiden mit flüssigem Sauerstoff zu schaffen, welches unter atmosphärischen Bedingungen durchgeführt werden kann und eine große Steigerung der Schnittgeschwindigkeit ermöglicht.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Durch die erfindungsgemäße Kühlung des flüssigen Sauerstoffes in der Zuleitung zur Schneiddüse mit flüssigem Stickstoff wird jegliche Verdampfung des Sauerstoffes in der Zuleitung und beim Austritt aus der Schneiddüse verhindert. Es wird somit ein präziser Flüssigkeitsstrahl gebildet. Durch die hohen Drücke von 200 bis 4000 bar wird zudem die kinetische Energie des Flüssigkeitsstrahls so sehr gesteigert, daß hierdurch der Schneidvorgang kräftig unterstützt wird, ähnlich dem Wasserstrahlschneiden. Die Auftreffenergie des Sauerstoffes wird hierbei aufgrund seiner höheren Dichte gesteigert. Darüberhinaus ist wegen der kleineren Auftrefffläche die Auftreffenergie pro Flächeneinheit größer. Zweckmäßigerweise wird das Verfahren so betrieben, daß die Menge an flüssigem Sauerstoff der für das Brennschneiden erforderlichen Menge an gasförmigem Sauerstoff entspricht. Die durch den flüssigen Sauerstoff eingetragene Kälte kann in Kauf genommen werden, da die Verdampfungswärme von flüssigem Sauerstoff verhältnismäßig klein ist. Gegebenenfalls kann der Flüssigstrahlschneiddüse ein Vorwärmbrenner vorgeschaltet werden, mit dem die Oberflächentemperatur des Werkstückes auf Zündtemperatur erhitzt wird.

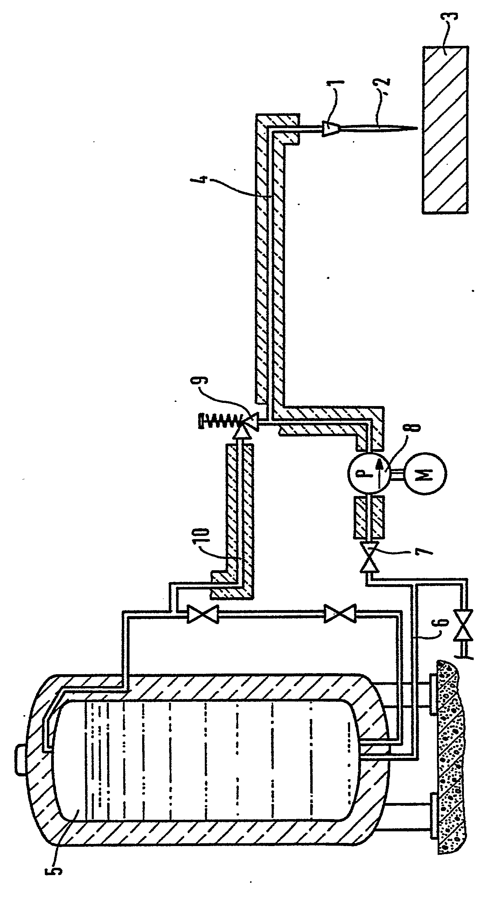

Die Zeichnung veranschaulicht ein Ausführungsbeispiel der Erfindung, nämlich das Schneiden einer Strangußbramme, in schematischer Form.

Dargestellt ist eine Flüssigstrahlschneiddüse, aus welcher ein Strahl 2 flüssigen Sauerstoffs mit hoher Geschwindigkeit austritt und auf die zu schneidende Strangußbramme 3 auftrifft. Die Zufuhr des flüssigen Sauerstoffs erfolgt durch eine isolierte Leitung 4 aus einem isolierten Speicher 5 für flüssigen Sauerstoff. Dieser isolierte Speicher 5 besitzt die üblichen, nicht näher bezeichneten Rohrleitungen und Ventile zur Entnahme von flüssigem und gasförmigem Sauerstoff. Der für das erfindungsgemäße Verfahren benötigte flüssige Sauerstoff wird durch die Leitung 6 aus dem isolierten Speicher 5 abgezogen und gelangt über das Ventil 7 zur Hochdruckpumpe 8, welche den Druck des flüssigen Sauerstoffs auf 500 bar erhöht. Der endgültige Druck des an der Flüssigstrahlschneiddüse 1 zur Verfügung stehenden flüssigen Sauerstoffs wird mit Hilfe des einstellbaren Überströmventils 9 festgelegt. Nicht benötigter flüssiger Sauerstoff fließt vom Überströmventil 9 durch die Leitung 10 zurück in den isolierten Speicher 5. Auch die zur Hochdruckpumpe 8 und zum Überströmventil 9 führende Leitung sowie die vom Überströmventil 9 abgehenden Leitungen sind isoliert. Die isolierte Leitung 4 kann zusätzlich mit einer Ummantelung aus flüssigem Stickstoff versehen werden, um ein vorzeitiges Verdampfen des Sauerstoffs zu verhindern. Mit den marktüblichen Flüssigsauerstoffpumpen lassen sich Höchstdrücke von 300 bis 600 bar erreichen. Die Erfindung ist jedoch nicht auf diesen Druckbereich beschränkt, sondern es können auch die vom Wasserstrahlschneiden her bekannten Drücke bis 4000 bar und mehr zur Anwendung kommen.

## Patentansprüche

1. Verfahren zum autogenen Brennschneiden mit flüssigem Sauerstoff, dadurch gekennzeichnet, daß der Sauerstoff in flüssiger Form auf einen Druck zwischen 200 und 4000 bar gebracht, durch eine Flüssigstrahlschneiddüse (1) der Schneidstelle zugeführt wird und die zur Flüssigstrahlschneiddüse führende Leitung (4) mit flüssigem Stickstoff gekühlt wird.

2. Verfahren nach Anspruch 1, dadurch gekennzeichnet, daß der Flüssigkeitstrahlschneiddüse ein Vorwärmbrenner zugeordnet ist, mit dem die Oberflächentemperatur des Werkstückes auf Zündtemperatur erhitzt wird.

3. Vorrichtung zur Durchführung des Verfahrens nach einem der Ansprüche 1 oder 2, mit einer Versorgungseinrichtung für Sauerstoff und einer mit der Versorgungseinrichtung verbundenen Schneiddüse, dadurch gekennzeichnet, daß die Versorgungseinrichtung ein isolierter Speicher (5) für flüssigen Sauerstoff ist, die Schneiddüse als Flüssigstrahlschneiddüse (1) ausgebildet ist, welche durch eine isolierte Leitung (4) und eine Hochdruckpumpe (8) mit dem Speicherraum für flüssigen Sauerstoff in Verbindung steht und die isolierte Leitung mit einer Ummantelung aus flüssigem Stickstoff versehen ist.

4. Vorrichtung nach Anspruch 3, dadurch gekennzeichnet, daß der Flüssigstrahlschneiddüse ein Vorwärmbrenner zugeordnet ist.

## Claims

1. Method of autogenous flame cutting with liquid oxygen, characterized in that the oxygen in liquid form, brought to a pressure of between 200 and 4000 bar, is fed to the cutting point through a liquid-jet cutting tip (1), and the line (4) leading to the liquid-jet cutting tip is cooled with liquid nitrogen.

2. Method according to Claim 1, characterized in that a preheating burner with which the surface temperature of the workpiece is heated to ignition temperature is allocated to the liquid-jet cutting tip.

3. Apparatus for performing the method according to either of Claims 1 or 2, comprising a supply device for oxygen and a cutting tip connected to the supply device, characterized in that the supply device is an insulated accumulator (5) for liquid oxygen, the cutting tip is designed as a liquid-jet cutting tip (1) which is connected to the accumulator space for liquid oxygen by an insulated line (4) and a highpressure pump (8), and the insulated line is provided with a sheathing of liquid nitrogen.

4. Apparatus according to Claim 3, characterized in that a preheating burner is allocated to the liquid-jet cutting tip.

## Revendications

1. Procédé pour la coupe autogène avec de l'oxygène liquide, procédé caractérisé en ce que l'oxygène sous forme liquide, porté à une pression entre 200 et 4000 bars, est amené à l'emplacement de coupe par l'intermédiaire d'une buse de coupe à jet liquide (1), tandis que la canalisation aboutissant à cette buse de coupe à jet liquide (4) est refroidie avec de l'azote liquide.

2. Procédé selon la revendication 1, caractérisé en ce qu'un brûleur de préchauffage est associé à la buse de coupe à jet liquide, brûleur grâce auquel, la température superficielle de la pièce d'œuvre est amenée à la température d'allumage.

3. Dispositif pour la mise en œuvre du procédé selon une des revendications 1 ou 2, avec une installation d'alimentation pour l'oxygène et une buse de coupe reliée à cette installation, dispositif caractérisé en ce que l'installation d'alimentation est un réservoir isolé (5) pour l'oxygène liquide, la buse de coupe étant réalisée sous la forme d'une buse de coupe à jet liquide (1) qui est en communication par une canalisation isolée (4) et une pompe haute pression (8), avec le réservoir pour l'oxygène liquide, tandis que la canalisation isolée est munie d'un enveloppement en azote liquide.

4. Dispositif selon la revendication 3, caractérisé en ce qu'un brûleur de préchauffage est disposé sur la buse de coupe à jet liquide.